# EUROPEAN PATENT SPECIFICATION

(11) **EP 4 130 923 B1**
(45) Date of publication and mention of the grant of the patent: **20.11.2024**
(21) Application number: 22186325.1
(22) Date of filing: 21.07.2022
(51) Int. Cl.: G05D 1/245, A01D 34/00, G05D 1/247, G05D 1/648, G05D 105/15, G05D 107/20, G05D 109/10, G05D 111/30, G05D 111/50

(54) **GRASS-CUTTING ROBOT AND CONTROL METHOD THEREFOR**
GRASSCHNEIDROBOTER UND STEUERVERFAHREN DAFÜR
ROBOT DE COUPE D'HERBE ET SON PROCÉDÉ DE COMMANDE

(30) Priority: 03.08.2021 CN 202110888585
(43) Date of publication of application: 08.02.2023
(73) Proprietor: Techtronic Cordless GP, Anderson, SC 29621 (US)
(72) Inventor: LIU, Heng Sheng, Dongguan City (CN)
(74) Representative: Novagraaf Group

(56) References cited:
- US-A1- 2011 202 175
- US-A1- 2015 366 130
- US-A1- 2021 089 034

## Description

### Technical Field

The present invention relates to the field of autonomous robots, in particular to the field of self-propelled robots, and more specifically to a grass-cutting robot and a control method therefor.

### Background Art

As technology develops, self-propelled robot tools such as grass-cutting robots are being used ever more widely. Grass-cutting robots can work by themselves, e.g. cut grass, in a predetermined work area without the need for user intervention. This not only saves manpower but also allows the user to have more free time.

However, grass-cutting robots are likely to encounter problems while moving autonomously. For example, the physical condition of the work area might not be ideal, e.g. there may be a slope, obstacles, or a likelihood of slippage, etc. If a grass-cutting robot encounters such conditions while advancing, it may lose its balance or deviate from a grass-cutting route, thus being unable to complete the work satisfactorily, e.g. weeds in some areas might not be able to be cleared properly. Furthermore, there might also be a risk to safety.

US patent application publication no. 2021/089034 A1 describes a propulsion control arrangement for a self-propelled robotic tool, wherein the robotic tool comprises at least one swivel caster wheel configured to abut against a ground surface during operation of the robotic tool. The control arrangement is configured to, upon detection of a stop event of the robotic tool after travel in a first longitudinal direction of the robotic tool, turn the robotic tool a predetermined angle, and then initiate propulsion in a second longitudinal direction of the robotic tool being opposite to the first longitudinal direction.

US patent application publication no. 2015/366130 A1 describes a robotic work tool configured for improved turning in a slope, said robotic work tool comprising a slope detector, at least one magnetic field sensor, a controller, and at least two driving wheels, the robotic work tool being configured to detect a boundary wire and in response thereto determine if the robotic work tool is in a slope, and if so, perform a turn by rotating each wheel at a different speed thereby reducing a risk of the robotic work tool getting stuck.

### Summary of the invention

In response to one or more deficiencies in the prior art, the present invention provides a grass-cutting robot and a method for controlling same.

According to one aspect of the present invention, a control method for a grass-cutting robot is provided. The grass-cutting robot comprises a travelling apparatus configured to facilitate travel of the grass-cutting robot on a physical surface in a first direction and a motive power apparatus configured to drive the travelling apparatus. The method comprises: detecting an attitude of the grass-cutting robot, corresponding to the attitude in which a movement of at least part of the travelling apparatus of the grass-cutting robot causes the grass-cutting robot to travel in the first direction; determining that the attitude meets a predetermined condition, and thus applying a control signal to motive power apparatus of the grass-cutting robot, the control signal causing the motive power apparatus to generate a resistance in the travelling apparatus, and the resistance causing the movement of at least part of the travelling apparatus to be hindered; and wherein the resistance is enough to hinder movement of said at least part of the travelling apparatus in the first direction, but not enough to cause a movement of said at least part of the travelling apparatus in a second direction different from the first direction.

Optionally or additionally, the angle between the second direction and the first direction is greater than 90 degrees but no more than 270 degrees, and more preferably about 180 degrees.

Optionally or additionally, the motive power apparatus outputs torque in a third direction before the control signal is applied, and the control signal causes the motive power apparatus to output torque in a fourth direction opposite to the third direction.

Optionally or additionally, the control signal is applied to the motive power apparatus, and preferably comprises a voltage signal or a current signal.

Optionally or additionally, the step of detecting an attitude of the grass-cutting robot comprises detecting one or more of the following: detecting whether the grass-cutting robot experiences a stop event; detecting whether the grass-cutting robot is close to a boundary line; detecting a speed of advance of the grass-cutting robot; detecting a turning speed of the grass-cutting robot; detecting the angle of the grass-cutting robot relative to a horizontal plane; and detecting the angle between a longitudinal axis of the grass-cutting robot and a gradient direction.

Optionally or additionally, the predetermined condition comprises one or more of the following: the distance from the grass-cutting robot to the boundary line being less than a first threshold; the speed of advance of the grass-cutting robot being greater than a second threshold; the turning speed of the grass-cutting robot being greater than a third threshold; the angle of the grass-cutting robot relative to the horizontal plane being greater than a fourth threshold; and the angle between the axis of the grass-cutting robot and the gradient direction being less than a fifth threshold.

Optionally or additionally, the predetermined condition further comprises: the grass-cutting robot experiencing a stop event.

Optionally or additionally, the first threshold is preferably in the range of 0.4 m - 2 m, the second threshold is preferably in the range of 0.4 m/s - 1 m/s, the third threshold is preferably in the range of 3°/s - 15°/s, the fourth threshold is preferably in the range of 5° - 20°, and the fifth threshold is preferably in the range of 10° - 80°.

According to another aspect of the present invention, a grass-cutting robot is provided. The grass-cutting robot comprises a travelling apparatus, a motive power apparatus, a detection apparatus and a control apparatus. The travelling apparatus is configured to facilitate travel of the grass-cutting robot on a physical surface in a first direction. The motive power apparatus is configured to drive the travelling apparatus. The detection apparatus is configured to detect an attitude of the grass-cutting robot, and the control apparatus is configured to apply a control signal to the grass-cutting robot when the attitude meets a predetermined condition, the control signal causing the motive power apparatus to generate a resistance in the travelling apparatus, and the resistance causing a movement of at least part of the travelling apparatus in the first direction to be hindered, and the resistance is enough to hinder the movement of said at least part of the travelling apparatus in the first direction, but not enough to cause a movement of said at least part of the travelling apparatus in a second direction different from the first direction.

Optionally or additionally, the travelling apparatus comprises a first travelling apparatus and a second travelling apparatus, and the motive power apparatus comprises a first motor for driving the first travelling apparatus and a second motor for driving the second travelling apparatus. The detection apparatus comprises a first encoding apparatus associated with the first travelling apparatus and a second encoding apparatus associated with the second travelling apparatus. The control apparatus is configured to calculate a speed of advance and/or mileage of advance of the first travelling apparatus and the second travelling apparatus at least partly according to an output of the first encoding apparatus and the second encoding apparatus, and optionally, based on the speed of advance and/or mileage of advance, calculate a speed of advance and/or a turning speed of the grass-cutting robot.

Optionally or additionally, the detection apparatus comprises an apparatus for detecting whether the grass-cutting robot is close to a boundary line.

Optionally or additionally, the detection apparatus comprises an apparatus for detecting the angle of the grass-cutting robot relative to a horizontal plane and/or an apparatus for detecting the angle between a longitudinal axis of the grass-cutting robot and a gradient direction, the apparatus for example being a gyroscope.

Optionally or additionally, the control apparatus comprises a comparing means, configured to compare the following detected value with a predetermined value and generate the control signal according to the result of the comparison, the detected value comprising one or more of the following: a stop event of the grass-cutting robot; the distance from the grass-cutting robot to a boundary line; a speed of advance of the grass-cutting robot; a turning speed of the grass-cutting robot; the angle of the grass-cutting robot relative to a horizontal plane; and the angle between a longitudinal axis of the grass-cutting robot and a gradient direction.

Optionally or additionally, the control signal is applied to the motive power apparatus, and preferably comprises a voltage signal or a current signal.

Optionally or additionally, the control signal causes a reversal of output torque of the motive power apparatus.

The grass-cutting robot and control method therefor according to one or more embodiments of the present invention have a number of advantages. For example, the grass-cutting robot according to one or more embodiments of the present invention has improved control precision, being able to achieve better control of its own operating state or working state in various non-ideal working environments or when necessary, e.g. one or more of faster braking, more precise turning and more robust balance. For example, the grass-cutting robot according to one or more embodiments of the present invention has higher intelligence and better self-management. As another example, the control method for a grass-cutting robot according to one or more embodiments of the present invention can improve control of the grass-cutting robot, such that the grass-cutting robot has more precise control capability in non-ideal working environments or when necessary. For example, the balance of the grass-cutting robot can be improved, and the work effectiveness thereof can be improved, e.g. a fast and accurate response is possible when an abnormal event occurs or when necessary.

More embodiments and beneficial technical effects of the present invention will be described in detail below.

### Brief Description of the Drawings

Fig. 1A shows a schematic drawing of a grass-cutting robot according to embodiments of the present invention.
Fig. 1B shows a bottom view of part of the grass-cutting robot in Fig. 1A.
Fig. 1C shows other views of the grass-cutting robot in Fig. 1A.
Fig. 2 shows a schematic box diagram of a grass-cutting robot according to embodiments of the present invention.
Fig. 3 shows a schematic box diagram of a grass-cutting robot according to other embodiments of the present invention.
Fig. 4 shows a schematic box diagram of a grass-cutting robot according to other embodiments of the present invention.
Fig. 5 shows a flowchart of a control method for a grass-cutting robot according to embodiments of the present invention.
Fig. 6 shows a schematic drawing of directions in which resistance is applied to the grass-cutting robot according to embodiments of the present invention.
Fig. 7 shows a schematic drawing of a grass-cutting robot according to embodiments of the present invention, advancing on a physical surface having a gradient.
Fig. 8 shows a schematic drawing of a grass-cutting robot according to other embodiments of the present invention, advancing on a physical surface having a gradient.
Fig. 9 shows a schematic drawing of a grass-cutting robot according to embodiments of the present invention when it is turning.
Fig. 10 shows a schematic drawing of a grass-cutting robot according to embodiments of the present invention, advancing in a working area defined by a boundary line.
Fig. 11 shows a schematic diagram of the superimposition of a control signal applied to a grass-cutting robot and another control signal according to embodiments of the present invention.

### Detailed Description of Embodiments

In order to facilitate understanding of the present invention, a number of exemplary embodiments will be described below with reference to related drawings. For convenience, the following description is of a grass-cutting robot. However, those skilled in the art should understand that the ideas expounded below with reference to one or more embodiments can similarly be applied to other autonomous robots or self-propelled robot tools, e.g. floor-sweeping robots, etc.

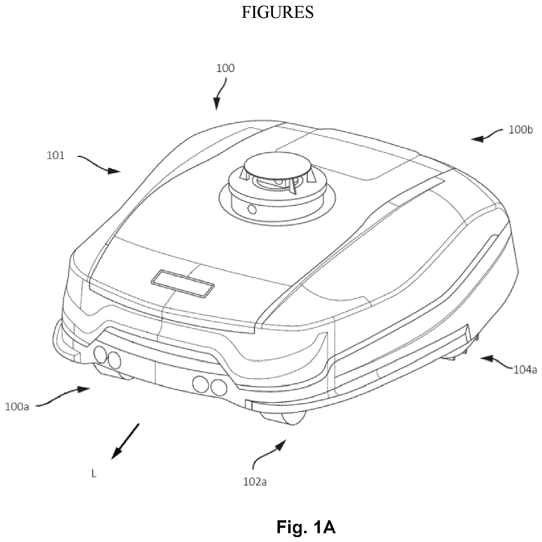

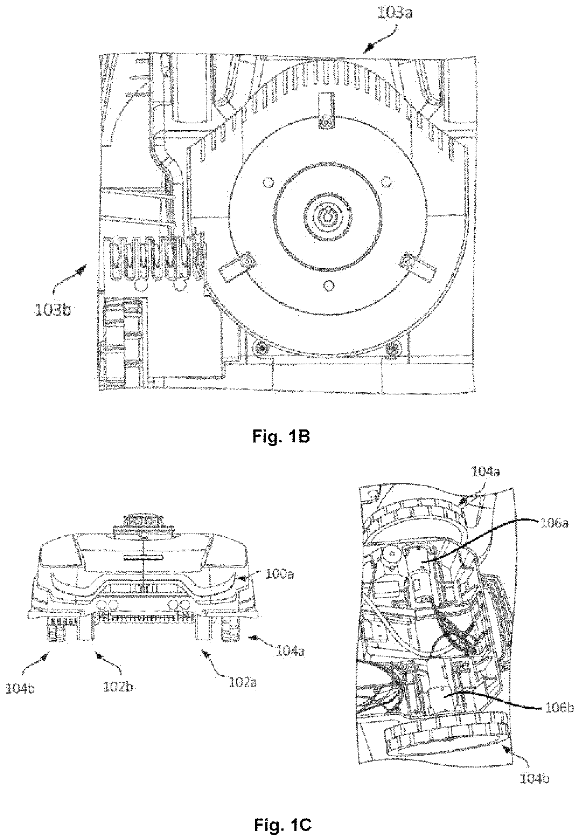

According to one aspect of the present invention, Figs. 1A - 1C show schematic drawings of a grass-cutting robot 100 according to embodiments of the present invention.

As shown in the figures, the grass-cutting robot 100 comprises a housing 101, and at least one grass-cutting tool 103a, 103b disposed below the housing 101. The grass-cutting robot 100 has a first end or front end 100a, a second end or rear end 100b, and a longitudinal axis or axis L extending through the first end 100a and second end 100b.

The grass-cutting robot 100 comprises a travelling apparatus and a motive power apparatus. The travelling apparatus is configured to facilitate travel of the grass-cutting robot 100 on a physical surface in a specific direction. As an example, the travelling apparatus comprises front rollers 102a, 102b disposed close to the first end 100a, and rear rollers 104a, 104b disposed close to the second end 100b.

The motive power apparatus is configured to drive the travelling apparatus. The motive power apparatus may comprise a suitable motive power source. As an example, the motive power apparatus comprises motors 106a and 106b. The motive power apparatus may drive the travelling apparatus in a suitable way. In this embodiment, the front rollers 102a, 102b are driven wheels or casters of a smaller size, while the rear rollers 104a, 104b are drive wheels of a larger size. The rear roller 104a is driven independently by the motor 106a; the rear roller 104b is driven independently by the motor 106b. The front rollers 102a, 102b are not driven directly by the motors 106a and 106b. In some embodiments, the front rollers 102a, 102b are further attached to the grass-cutting robot 100 in such a way as to be pivotable about corresponding pivot axes, wherein, when the grass-cutting robot is operating on horizontal ground, the corresponding pivot axes are substantially perpendicular to the ground. The front rollers 102a, 102b can pivot freely about their corresponding pivot axes, such that the rolling direction of the rollers can follow the direction in which the grass-cutting robot 100 is advancing.

The above are merely examples of the design of the travelling apparatus and motive power apparatus. In other embodiments, the travelling apparatus and motive power apparatus may be designed in other suitable ways according to actual needs. For example, the travelling apparatus may comprise less than four or more than four rollers, wherein one or more or all of the rollers may be driven directly by the motive power apparatus.

In this embodiment, generally, when the grass-cutting robot 100 is advancing in the direction of axis L shown in Fig. 1A, this can be referred to as advancing in a forward direction or forward progress; when the grass-cutting robot is advancing in the direction opposite to the direction of axis L, this can be referred to as advancing in a backward direction or retreating.

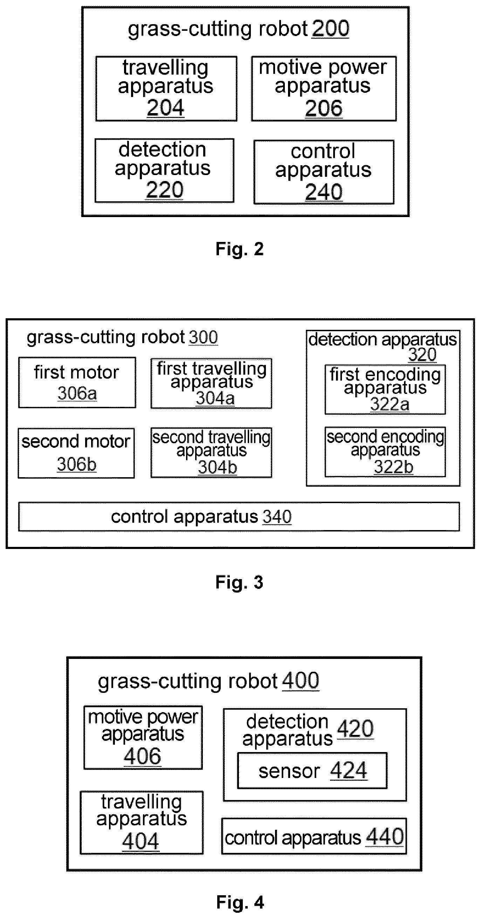

Fig. 2 shows a schematic box diagram of a grass-cutting robot 200 according to embodiments of the present invention. Fig. 2 may for example be a particular embodiment of the grass-cutting robot 100 shown in Figs. 1A and 1B.

As shown in Fig. 2, the grass-cutting robot 200 comprises a travelling apparatus 204 and a motive power apparatus 206. The travelling apparatus 204 and motive power apparatus 206 may for example be the travelling apparatus and motive power apparatus shown in Figs. 1A and 1B. The grass-cutting robot 200 can travel in a first direction on a physical surface (e.g. the ground), assisted by the travelling apparatus 204.

In addition, the grass-cutting robot 200 further comprises a detection apparatus 220 and a control apparatus 240. The detection apparatus 220 may comprise one or more sensors, to detect the attitude of the grass-cutting robot 200. The control apparatus 240 can control the travel of the grass-cutting robot 200, and in particular apply a specific control signal to the grass-cutting robot 200 when the detected attitude of the grass-cutting robot 200 meets a predetermined condition. In some embodiments, the control signal causes resistance to arise in the travelling apparatus 204; this resistance causes the tendency of at least part of the travelling apparatus 204 (e.g. one or more of the rollers) to move in a specific direction (e.g. the first direction) to be hindered.

In this text, the attitude may be a parameter or parameter combination associated with the grass-cutting robot, and may indicate one or more characteristics (e.g. physical characteristics or working characteristics) of the grass-cutting robot itself, or may indicate one or more characteristics of the working environment of the grass-cutting robot (e.g. ground gradient, whether obstacles are present, etc.), or may indicate a relative metric (e.g. relative distance, angle, etc.) between the grass-cutting robot and one or more target object present in the working environment. The attitude may be a static physical metric, but may also be a dynamic physical event or a characterization associated with one or more physical events.

In this text, resistance can be broadly understood to mean a hindering effect; it may be one or more forces, but may also be one or more torques, or a combination thereof.

For example, in some embodiments, the attitude may indicate one of, or a combination of two or more of, the following: whether the grass-cutting robot experiences a stop event, whether the grass-cutting robot is close to a boundary line, the speed at which the grass-cutting robot is advancing, the speed at which the grass-cutting robot is turning, the angle of the grass-cutting robot relative to a horizontal plane, and the angle between the longitudinal axis of the grass-cutting robot and a gradient direction. These examples are not exhaustive, and other scenarios are also possible.

The control apparatus 240 can judge whether the detected attitude meets the predetermined condition. For example, in some embodiments, the control apparatus 240 may comprise a comparing means (e.g. a comparator or a comparison circuit), to compare a detected value relating to attitude with a stored corresponding predetermined value, and thereby determine whether the attitude meets the predetermined condition. Regarding the determination of whether the attitude meets the predetermined condition, this will be expounded further below with reference to particular embodiments.

When the attitude meets the predetermined condition, the control apparatus 240 applies a control signal, causing resistance to arise in the travelling apparatus 204, so that the movement tendency of the travelling apparatus 204 is hindered. In some embodiments, the resistance in the travelling apparatus 204 is generated by the motive power apparatus 206. In some embodiments, before the control signal is applied, the grass-cutting robot 200 might already be operating under an existing control signal. When the control signal is applied, the existing control signal might still be present, might have already weakened or be weakening, or has already stopped. In other words, when the control signal is applied, the grass-cutting robot 200 has already experienced or is about to experience a stop event. Thus, the control signal might need to be superimposed on the existing control signal, before controlling the grass-cutting robot 200. In general, even if the existing control signal stops or a stop event occurs, the tendency to continue moving in the original manner under the influence of inertia or another effect (e.g. gravity), or the reality of such continued movement, might still be present in the grass-cutting robot. The new control signal applied when the attitude meets the predetermined condition will cause the tendency of the grass-cutting robot to continue operating in the original manner, or the reality of such continued operation, to be hindered, e.g. weaken or offset the original movement tendency. For example, the grass-cutting robot 200 might originally be moving in the first direction under the action of the existing control signal; when the control apparatus 240 applies the new control signal to the grass-cutting robot 200, this causes the motive power apparatus 206 to apply an output torque to the travelling apparatus 204 that is in the opposite direction to the first direction, thereby hindering the progress of the travelling apparatus 204 in the first direction.

Fig. 3 shows a schematic box diagram of a grass-cutting robot 300 according to other embodiments of the present invention. The grass-cutting robot 300 may for example be a particular embodiment of the grass-cutting robot 200 described with reference to Fig. 2.

As shown in the figure, the grass-cutting robot 300 comprises a first motor 306a, a second motor 306b, a first travelling apparatus 304a, a second travelling apparatus 304b, a detection apparatus 320 and a control apparatus 340.

As an example, the first motor 306a is used to drive the first travelling apparatus 304a, and the first travelling apparatus 304a is for example the rear roller 104a shown in Fig. 1A. The second motor 306b is used to drive the second travelling apparatus 304b, and the second travelling apparatus 304b is for example the rear roller 104b shown in Fig. 1A.

The detection apparatus 320 comprises a first encoding means 322a and a second encoding means 322b. The first encoding means 322a is associated with the first travelling apparatus 304a. The first encoding means 322a is for example an encoder disposed on the first travelling apparatus 304a, for recording the number of revolutions of the first travelling apparatus 304a within a specific time period. The second encoding means 322b is associated with the second travelling apparatus 304b. The second encoding means 322b is for example an encoder disposed on the second travelling apparatus 304b, for recording the number of revolutions of the second travelling apparatus 304b within a specific time period.

The control apparatus 340 receives an output of the detection apparatus 320. Based on the recorded number of revolutions of the first and second travelling apparatuses 304a, 304b, the control apparatus 340 may for example calculate the speed of advance and the mileage of advance, etc. of the corresponding travelling apparatus. In some embodiments, based on these data, the control apparatus 340 may further obtain one or more of the following: the speed of advance of the grass-cutting robot 300, the mileage of advance thereof, whether it is turning, and the turning speed and turning angle when turning, etc. The control apparatus 340 may judge whether one or more of the parameters indicating attitude meet a predetermined condition, and if so, apply a control signal to apply resistance to at least one of the travelling apparatuses, to hinder the existing movement tendency thereof.

Fig. 4 shows a schematic box diagram of a grass-cutting robot 400 according to other embodiments of the present invention. The grass-cutting robot 400 may for example be a particular embodiment of the grass-cutting robot 200 described with reference to Fig. 2.

As shown in the figure, the grass-cutting robot 400 comprises a travelling apparatus 404, a motive power apparatus 406, a detection apparatus 420 and a control apparatus 440. In Fig. 4, the detection apparatus 420 comprises a sensor 424. The sensor 424 may be one sensor, but may also be a set of two or more sensors.

The sensor 424 may be used to detect the attitude of the grass-cutting robot. In some embodiments, the sensor 424 may comprise may comprise a boundary line sensor, for sensing a magnetic field generated by a boundary line, for the purpose of judging whether the grass-cutting robot is close to the boundary line, or the distance to the boundary line. In other embodiments, the sensor 424 may comprise a collision sensor, for sensing whether the grass-cutting robot has collided with an obstacle. In other embodiments, the sensor 424 comprises one or more of the following: a means for detecting the angle of the grass-cutting robot relative to the horizontal plane, a means for detecting the angle between the longitudinal axis of the grass-cutting robot and a gradient direction, etc. The sensor 424 for example comprises an inclinometer or accelerometer. In some embodiments, the inclinometer comprises a gyroscope. In some embodiments, the sensor 424 may detect whether the grass-cutting robot 400 experiences a stop event. The stop event may be an autonomous stop event under predetermined control of the control apparatus 440, or a passive stop event caused by an error. The stop event may for example arise for various reasons in a variety of situations, including but not limited to: receiving a stop instruction, a fault, encountering a boundary line, encountering an obstacle, encountering a slope, the grass-cutting robot tilting to a certain angle, reaching a charging station, etc. In other embodiments, the control apparatus 440 judges whether a stop event has occurred.

Based on an output of the sensor 424, the control apparatus 440 may judge whether one or more of the parameters indicating attitude meet a predetermined condition, and if so, apply a control signal to generate resistance in the travelling apparatus, to hinder the existing movement tendency thereof.

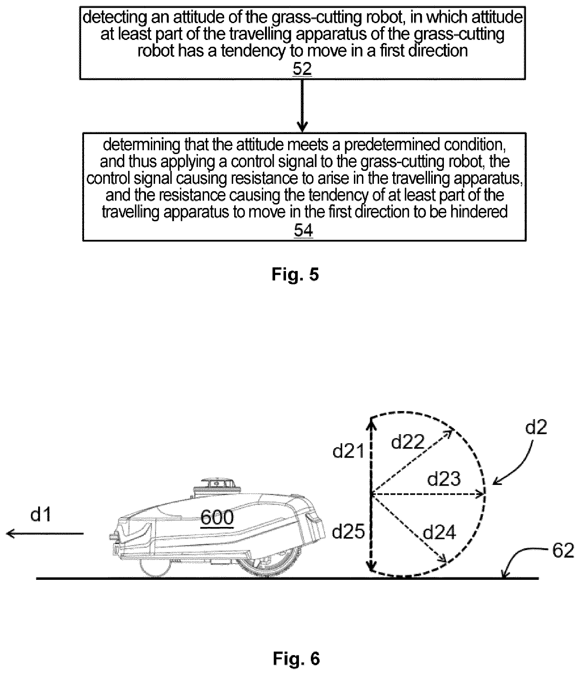

Fig. 5 shows a flowchart of a control method for a grass-cutting robot according to embodiments of the present invention. The method shown as an example in Fig. 5 may for example be used to control the grass-cutting robot described above with reference to one or more of Figs. 1A - 4.

In box 52, a detection apparatus detects an attitude of the grass-cutting robot, in which attitude at least part of the travelling apparatus of the grass-cutting robot has a tendency to move in a first direction. In box 54, the control apparatus determines that the attitude meets a predetermined condition, and thus applies a control signal to the grass-cutting robot, the control signal causing resistance to arise in the travelling apparatus, and the resistance causing the tendency of at least part of the travelling apparatus to move in the first direction to be hindered.

In some embodiments, the attitude indicates whether the grass-cutting robot experiences a stop event. When a stop event is detected, the control apparatus applies a control signal to the grass-cutting robot, so that the movement tendency of the grass-cutting robot in the movement direction prior to application of the control signal is hindered. Thus, when a stop event is detected, the resistance generated by the applied control signal can at least partially offset or overcome undesired movement caused by inertia or another effect (e.g. gravity), such that the grass-cutting robot stops quickly and remains stationary.

In some embodiments, the attitude indicates whether the grass-cutting robot is close to a boundary line, and the predetermined condition comprises: the distance from the grass-cutting robot to the boundary line being less than a first threshold. The first threshold is for example in the range of 0.4 m - 2 m, e.g. 0.4 m, 0.8 m, 1.2 m, 1.6 m, 2 m, etc. When the distance from the grass-cutting robot to the boundary line is less than a first threshold, it is desirable that the grass-cutting robot should retreat or turn, rather than crossing the boundary line into a non-working area. Thus, the resistance generated by the applied control signal can at least partially offset or overcome undesired forward progress caused by inertia, so that the grass-cutting robot will not leave the working area, and quickly retreats or turns.

In some embodiments, the attitude indicates the speed of advance of the grass-cutting robot, and the predetermined condition comprises: the speed of advance of the grass-cutting robot being greater than a second threshold. The second threshold is for example in the range of 0.4 m/s - 1 m/s, e.g. 0.4 m/s, 0.6 m/s, 0.8 m/s, 1 m/s, etc. Too fast a speed of advance of the grass-cutting robot will give rise to problems, such as loss of balance, the crossing of boundaries, or a poor grass-cutting result, etc., and is therefore undesirable. When the speed of advance of the grass-cutting robot is greater than the second threshold, the resistance generated by the applied control signal can reduce the speed of advance of the grass-cutting robot, so that it drops to a desired range.

In some embodiments, the attitude indicates the turning speed of the grass-cutting robot, and the predetermined condition comprises: the turning speed of the grass-cutting robot being greater than a third threshold. The third threshold is for example in the range of 3°/s - 15°/s, e.g. 3°/s, 6°/s, 8°/s, 10°/s, 12°/s, 15°/s, etc. Too fast a turning speed of the grass-cutting robot will cause problems, such as turning too far, flipping over, a poor grass-cutting effect at the point of turning, etc., and is therefore undesirable. When the turning speed of the grass-cutting robot is greater than the third threshold, the resistance generated by the applied control signal can reduce the turning speed of the grass-cutting robot, so can not only control turning precision (e.g. to avoid turning too far) but also avoid or mitigate problems such as flipping over.

In some embodiments, the attitude indicates the angle of the grass-cutting robot relative to the horizontal plane, and the predetermined condition comprises: the angle of the grass-cutting robot relative to the horizontal plane being greater than a fourth threshold. The fourth threshold is for example in the range of 5° - 20°, e.g. 5°, 10°, 15°, 20°, etc. On a slope or a non-ideal horizontal surface (e.g. not flat, or with obstacles present), the angle of the grass-cutting robot relative to the horizontal plane might be too large; this might result in non-autonomous movement of the grass-cutting robot under the influence of gravity, or will affect the grass-cutting result, or cause the grass-cutting robot to lose balance, etc. and is therefore undesirable. When the angle of the grass-cutting robot relative to the horizontal plane is greater than the fourth threshold, the resistance generated by the applied control signal can avoid non-autonomous movement of the grass-cutting robot, or can slow down the advance of the grass-cutting robot, or cause the grass-cutting robot to stop. This is advantageous for both safety and the work done by the grass-cutting robot itself; for example, the grass-cutting robot can move slowly until the angle of inclination thereof has decreased to an acceptable state (i.e. when the tilt angle of the grass-cutting robot is large, the speed of advance thereof is reduced), and then continue working.

In some embodiments, the attitude indicates the angle between the longitudinal axis of the grass-cutting robot and a gradient direction, and the predetermined condition comprises: the angle between the longitudinal axis of the grass-cutting robot and the gradient direction being less than a fifth threshold. The fifth threshold is for example in the range of 10° - 80°, e.g. 10°, 20°, 30°, 40°, 50°, 60°, 70°, 80°, etc. When the angle between the longitudinal axis of the grass-cutting robot and the gradient direction is too small, e.g. close to zero degrees, the grass-cutting robot might slide down the slope under the influence of gravity, which is undesirable. Thus, when the angle is less than the fifth threshold, the application of a control signal to generate resistance can avoid or mitigate slippage of the grass-cutting robot down the slope.

In some embodiments, the attitude indicates a combination of more than one of the above scenarios. For example, when a stop event is detected and the angle of the grass-cutting robot relative to the horizontal plane is greater than a threshold, or when a stop event is detected and the angle between the longitudinal axis of the grass-cutting robot and a gradient direction is less than a threshold, or when a stop event is detected and the grass-cutting robot is close to a boundary line, or when a stop event is detected and the grass-cutting robot has a turning speed greater than a threshold, etc., it may be particularly advantageous to send a control signal to the grass-cutting robot. The above examples are merely schematic, and not intended to impose any limitations on attitude combinations.

See Fig. 6 for further exemplification of the directions of resistance. As shown in the figure, the grass-cutting robot 600 advances in a direction d1 (i.e. a first direction) on a physical flat surface 62. The physical flat surface 62 may be a horizontal surface, or an inclined surface, or a combination of surfaces having a variety of different inclination characteristics.

When it is determined that the attitude meets the predetermined condition, the control signal causes a force to be applied to the grass-cutting robot 600 in a direction d2 (i.e. a second direction); this force has a hindering action, causing the movement tendency of the grass-cutting robot 600 in direction d1 to be hindered. As shown, the angle between direction d2 and direction d1 is greater than 90 degrees and not more than 270 degrees. That is to say, not taking size into account, direction d2 lies in a hemispherical region enclosed by a semicircular surface represented by a radius d21, a semicircular surface represented by a radius d25 and a curved surface at the right side of said radii, but does not include d21 and d25 themselves. For example, direction d2 may be d22, d23, d24, etc.

When direction d2 is ideally opposite direction d1 geometrically, d2 is at an angle of 180 degrees with respect to d1 (i.e. d2 is d23), in which case a control signal of minimum energy can be used to achieve the expected effect. That is to say, if it is desired to achieve the same hindering effect when d2 is not at an angle of 180 degrees with respect to d1, a larger control signal must be applied, e.g. a larger voltage or larger current.

In some embodiments, the resistance generated is enough to hinder movement of at least part of the travelling apparatus in the first direction, but not enough to cause at least part of the travelling apparatus to move in a second direction different from the first direction. Taking Fig. 6 as an example, the grass-cutting robot is originally moving in direction d1, and when the attitude meets the predetermined condition, the resistance generated hinders this movement tendency. However, the resistance in direction d2 is not enough to cause the grass-cutting robot to move in direction d2.

This is advantageous in many respects. For example, in the process of stopping the grass-cutting robot, it is often undesirable that the grass-cutting robot should move backward or move in another direction; thus, the resistance generated by the applied control signal may help the grass-cutting robot to stop quickly, but will not cause undesired movement. As another example, in the process of turning, it is desirable that the angle to be turned can be precisely controlled, but it is undesirable that the resistance be too large; if the resistance is too large, turning might not be possible, or more energy might need to be consumed. Thus, the size of the resistance generated by the applied control signal can substantially reach an extent that enables control of turning precision (e.g. to prevent excessively fast turning or turning too far); excessively large, undesirable turning resistance that would hinder the turning action will not be generated.

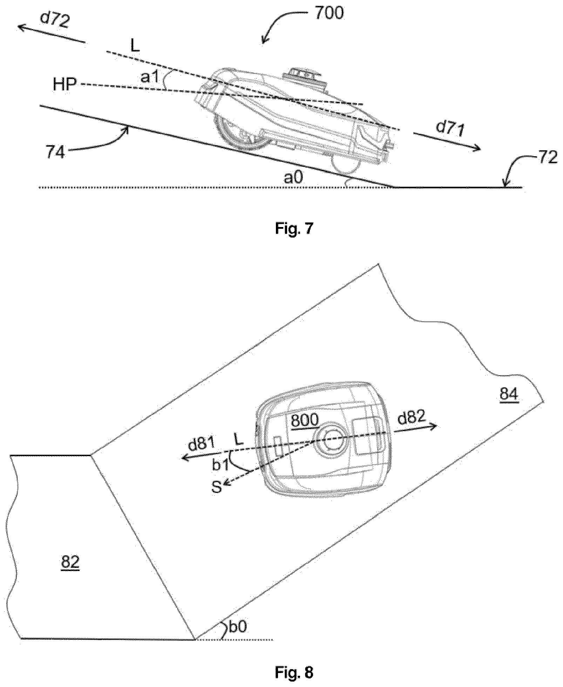

Fig. 7 shows a schematic drawing of a grass-cutting robot 700 according to embodiments of the present invention, advancing on a physical surface having a gradient.

As shown, the grass-cutting robot 700 is advancing in a direction d71 towards horizontal ground 72 on a physical surface or slope 74 with inclination angle a0. The grass-cutting robot 700 can determine its own inclination angle. The inclination angle may for example may be measured by the detection apparatus of the grass-cutting robot 700, or obtained by the control apparatus thereof by processing a data output of the detection apparatus. The inclination angle is for example the angle of the grass-cutting robot 700 relative to the horizontal plane, e.g. the angle a1 of the longitudinal axis L thereof relative to the horizontal plane HP. For an ideal slope 74, a1 may be equal to a0.

In some embodiments, if it is detected that the inclination angle a1 is greater than a certain value, a control signal will be applied to the motive power apparatus of the grass-cutting robot 700, to generate a force in a direction d72 for example, such that the movement tendency of the grass-cutting robot 700 in direction d71 is hindered. This is advantageous for preventing the grass-cutting robot 700 from advancing too fast, which would affect the grass-cutting result.

In some embodiments, as long as a1 is greater than zero, the grass-cutting robot 700 can judge that it is advancing on a non-horizontal physical surface; thus, when a stop or turning event takes place, resistance will be generated at an angle greater than 90 degrees but less than 270 degrees with respect to the direction of advance or the turning direction, thereby facilitating stopping or achieving a more precise turning action.

Fig. 8 shows a schematic drawing of a grass-cutting robot 800 according to other embodiments of the present invention, advancing on a physical surface having a gradient.

Fig. 8 shows horizontal ground 82 and a physical surface or slope 84 having a gradient. The inclination angle of the slope 84 is denoted b0, while the gradient direction is denoted S. The grass-cutting robot 80 is advancing in a direction d81 on the slope 84. The angle between the longitudinal axis L of the grass-cutting robot 800 and the gradient direction S is b 1. When b 1 is close to zero degrees or 180 degrees, the grass-cutting robot 800 is most likely to slide down the slope under the influence of gravity, which is undesirable.

In some embodiments, when the angle b1 is less than a certain value (this value being in the range of 10° - 80° for example), the control apparatus of the grass-cutting robot 800 will apply a control signal, to generate resistance at an angle greater than 90 degrees but less than 270 degrees with respect to the direction of advance d81, the resistance being in a direction d82 for example.

In other embodiments, when the angle b1 is close to 180 degrees, e.g. when b1 is greater than a certain value (this value being in the range of 100° - 170° for example), the control apparatus of the grass-cutting robot 800 will apply a control signal, to generate resistance at an angle greater than 90 degrees but less than 270 degrees with respect to the direction of advance.

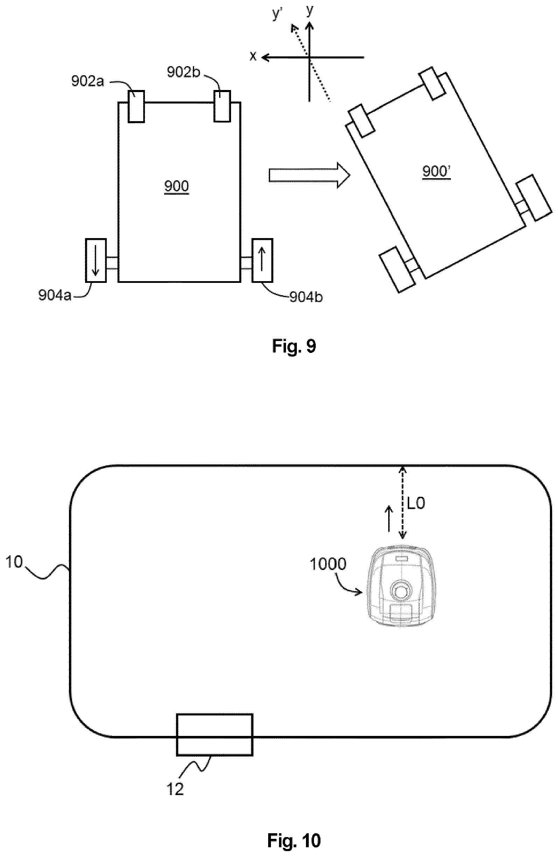

Fig. 9 shows a schematic drawing of a grass-cutting robot 900 according to embodiments of the present invention when it is turning. As shown, the grass-cutting robot 900 has four rollers 902a, 902b, 904a, 904b. Before turning, the longitudinal axis of the grass-cutting robot 900 lies in a direction y. After turning through a certain angle in direction x, the grass-cutting robot is labelled 900', and the longitudinal axis thereof lies in a direction y'.

In some embodiments, in the process of turning, the rollers 904a and 904b of the grass-cutting robot 900 rotate at different speeds or rotate in opposite directions (as indicated by the arrows), under the driving action of the motive power apparatus. The control apparatus of the grass-cutting robot 900 will apply a control signal, which causes the motive power apparatus to generate resistance in at least one of the rollers 904a and 904b, hindering the rotation tendency of the corresponding roller. The direction of this resistance may for example be at an angle greater than 90 degrees but less than 270 degrees, e.g. 180 degrees, with respect to the drive direction of the corresponding roller. In other embodiments, the control apparatus will only apply a control signal to generate corresponding resistance if the turning speed is greater than a threshold, e.g. greater than 5°/s.

Fig. 10 shows a schematic drawing of a grass-cutting robot 1000 according to embodiments of the present invention, operating in a working area defined by a boundary line.

As shown, a boundary line 10 defines the working area of the grass-cutting robot 1000. A charging station 12 is disposed on the boundary line 10. The grass-cutting robot 1000 advances along a pre-planned route or advances randomly in the working area, and can advance along the boundary line 10 to the charging station 12 for charging when its charge level is lower than a certain level.

When the charge level of the grass-cutting robot 1000 is ample, it is undesirable that it should cross the boundary line 10. Thus, in some embodiments, when the grass-cutting robot 1000 advances in the direction indicated by the arrow to a position where its distance L0 from the boundary line 10 is less than a certain value, the grass-cutting robot 1000 will generate a control instruction to retreat or turn. In some embodiments, when it is detected that L0 is less than a certain value (e.g. 0.7 m), a control module will generate a control signal, wherein the resistance generated by the applied control signal can at least partially offset or overcome undesired forward progress caused by inertia, such that the grass-cutting robot quickly retreats or turns.

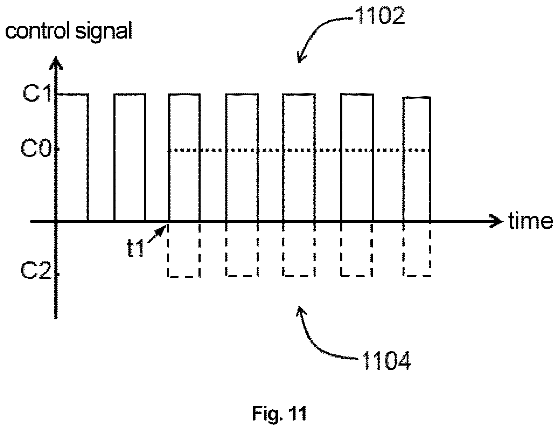

Fig. 11 shows a schematic diagram of the superimposition of a control signal applied to a grass-cutting robot and another control signal according to embodiments of the present invention.

The control signals may be voltage signals, but may also be current signals, or combinations of one or more of voltage, current and other signals. The control signals may be applied to the motive power apparatus of the grass-cutting robot, thereby generating torque to drive the travelling apparatus. In this embodiment, as an illustration, the control signals are periodic square wave signals. Those skilled in the art should understand that other types of control signals are also possible, e.g. sine wave signals, sawtooth wave signals, etc.

As shown in the figure, before time t1, the grass-cutting robot is driven with a control signal 1102, so that it advances in a first direction. The peak strength of control signal 1102 is C1. Beginning at time t1, a control signal 1104 of opposite polarity is applied to the grass-cutting robot, the peak strength of control signal 1104 being C2. Thus, beginning at time t1, the control signal resulting from superimposition is the part that remains after removing control signal 1104 from control signal 1102, and the result of superimposition is a reduction in the driving action applied to the grass-cutting robot in the first direction. For example, in one embodiment, before time t1, the motive power apparatus originally drove the grass-cutting robot with a torque of 1 N.m; beginning at time t1, after superimposition of the control signals, the torque can drop to 0.7 N.m.

Fig. 11 merely shows a simplified illustration. In practice, the waveforms of the control signals may be very complex, and the waveforms of control signals 1102 and 1104 may be different; there may also be three or more different control signals that are superimposed, and the different control signals may have their own respective time points or time periods.

For example, in some embodiments, the control signal generating resistance may begin to be applied when a stop event occurs, or may begin to be applied in the stopping process. In some embodiments, when the grass-cutting robot stops on a slope, the control signal generating resistance is applied only when the stop event is complete; this may for example prevent slippage of the grass-cutting robot, increasing its stability when stopped on the slope.

For example, in some embodiments, the control signal generating resistance may begin to be applied when a turning event occurs, or may begin to be applied in the turning process. For example, in some embodiments, the control signal generating resistance begins to be applied only when the grass-cutting robot has turned to a certain angle. This is advantageous in some situations, e.g. it can avoid generating unnecessary resistance at the start of the turn, with the application of the hindering action beginning only when the grass-cutting robot has turned to a certain angle and turning precision needs to be controlled.

The ideas of the present invention and the beneficial technical effects thereof have been expounded above with reference to embodiments. Those skilled in the art will realize from the above that the grass-cutting robot can be controlled conveniently and effectively under predetermined conditions in accordance with one or more embodiments of the present invention. Control is implemented via an electronic circuit or electronic chip, being quick, accurate, convenient and easy to program, enabling the grass-cutting robot to respond quickly to a variety of different situations, while adjustments can be performed according to variation in different grass-cutting robot working environments.

According to one or more embodiments of the present invention, there is no need to add complex or additional elements, circuits or apparatuses to control the grass-cutting robot. All that need be done is to apply an additional control signal to generate an expected hindering action when a predetermined condition is met. Optionally and advantageously, the applied control signal will not cause an additional, undesired movement or action of the grass-cutting robot.

Additionally, those skilled in the art should understand that the embodiments herein are only for the purpose of exemplifying the present invention, and by no means limit the present invention. For example, in one or more embodiments above, the detection apparatus and control apparatus may be disposed on the grass-cutting robot. This is not necessary. In some embodiments, at least the control apparatus may be configured to be physically detached from the grass-cutting robot. For example, at least part or all of the control apparatus may be disposed at one or more server end, personal computer (e.g. smart phone) end, etc. that is in communication with the grass-cutting robot via one or more network. Attitude information and/or control instructions are exchanged between the grass-cutting robot and the control apparatus via the network. Other configurations are also possible.

In addition, one figure may show multiple elements. Those skilled in the art should understand that this is only for the purpose of simplicity and does not mean that each element is necessary. Those skilled in the art will understand that one or more elements in the same figure may be optional or additional elements within the scope of the appended claims.

Those skilled in the art should also understand that the above embodiments attempt to illustrate one or more ideas of the present invention from different aspects, and they are not isolated; instead, those skilled in the art may combine different embodiments according to the appended claims to obtain other examples of the technical solution.

Unless otherwise defined, the technical and scientific terms used herein have the same meanings as commonly understood by those ordinarily skilled in the art of the present invention. The implementations of the present invention are illustrated in nonlimiting embodiments.

## Claims

1. Control method for a grass-cutting robot (100, 200, 300, 400, 600, 700, 800, 900, 1000), the grass-cutting robot (100, 200, 300, 400, 600, 700, 800, 900, 1000) comprising a travelling apparatus (204, 304a, 304b, 404) configured to facilitate travel of the grass-cutting robot (100, 200, 300, 400) on a physical surface (62, 72, 74, 84) in a first direction (d1, d71, d81) and a motive power apparatus (206, 306a, 306b, 406) configured to drive the travelling apparatus (204, 304a, 304b, 404), wherein the method comprises:
Detecting (52) an attitude of the grass-cutting robot (100, 200, 300, 400, 600, 700, 800, 900, 1000), corresponding to the attitude in which a movement of at least part of the travelling apparatus (204, 304a, 304b, 404) of the grass-cutting robot (100, 200, 300, 400, 600, 700, 800, 900, 1000) causes the grass-cutting robot (100, 200, 300, 400, 600, 700, 800, 900, 1000) to travel in the first direction (d1, d71, d81),
**characterized in that** the method further comprises:
determining (54) that the attitude meets a predetermined condition, and thus applying a control signal to the motive power apparatus (206, 306a, 306b, 406) of the grass-cutting robot (100, 200, 300, 400, 600, 700, 800, 900, 1000), the control signal causing the motive power apparatus (206, 306a, 306b, 406) to generate a resistance in the travelling apparatus (204, 304a, 304b, 404), and the resistance causing the movement of at least part of the travelling apparatus (204, 304a, 304b, 404) to be hindered; and
wherein the resistance is enough to hinder the movement of said at least part of the travelling apparatus (204, 304a, 304b, 404) in the first direction (d1, d71, d81), but not enough to cause a movement of said at least part of the travelling apparatus (204, 304a, 304b, 404) in a second direction (d2, d72, d82) different from the first direction (d1, d71, d81).

2. Control method according to Claim 1, wherein the angle between the second direction (d2, d72, d82) and the first direction (d1, d71, d81) is greater than 90 degrees but no more than 270 degrees, and preferably about 180 degrees.

3. Control method according to Claim 1, wherein the motive power apparatus (206, 306a, 306b, 406) outputs torque in a third direction before the control signal is applied, and the control signal causes the motive power apparatus (206, 306a, 306b, 406) to output torque in a fourth direction opposite to the third direction.

4. Control method according to Claim 1, wherein the control signal is applied to the motive power apparatus (206, 306a, 306b, 406), and preferably comprises a voltage signal or a current signal.

5. Control method according to any one of Claims 1-4, wherein the step of detecting an attitude of the grass-cutting robot (100, 200, 300, 400, 600, 700, 800, 900, 1000) comprises detecting one or more of the following:
detecting whether the grass-cutting robot (100, 200, 300, 400, 600, 700, 800, 900, 1000) experiences a stop event;
detecting whether the grass-cutting robot (1000) is close to a boundary line (10);
detecting a speed of advance of the grass-cutting robot (100, 200, 300, 400, 600, 700, 800, 900, 1000);
detecting a turning speed of the grass-cutting robot (100, 200, 300, 400, 600, 700, 800, 900, 1000);
detecting the angle (a1) of the grass-cutting robot (700) relative to a horizontal plane (HP); and
detecting the angle (b1) between a longitudinal axis (L) of the grass-cutting robot (800) and a gradient direction (S).

6. Control method according to Claim 5, wherein the predetermined condition comprises one or more of the following:
the distance (L0) from the grass-cutting robot (1000) to the boundary line (10) being less than a first threshold;
the speed of advance of the grass-cutting robot (100, 200, 300, 400, 600, 700, 800, 900, 1000) being greater than a second threshold;
the turning speed of the grass-cutting robot (100, 200, 300, 400, 600, 700, 800, 900, 1000) being greater than a third threshold;
the angle (a1) of the grass-cutting robot (700) relative to the horizontal plane (HP) being greater than a fourth threshold; and
the angle (b1) between the longitudinal axis (L) of the grass-cutting robot (800) and the gradient direction (S) being less than a fifth threshold.

7. Control method according to Claim 5 or 6, wherein the predetermined condition further comprises: the grass-cutting robot (100, 200, 300, 400, 600, 700, 800, 900, 1000) experiencing a stop event.

8. Control method according to Claim 6, wherein the first threshold is preferably in the range of 0.4 m - 2 m, the second threshold is preferably in the range of 0.4 m/s - 1 m/s, the third threshold is preferably in the range of 3°/s - 15°/s, the fourth threshold is preferably in the range of 5° - 20°, and the fifth threshold is preferably in the range of 10° - 80°.

9. Grass-cutting robot (100, 200, 300, 400, 600, 700, 800, 900, 1000), comprising:
a travelling apparatus (204, 304a, 304b, 404), for facilitating travel of the grass-cutting robot (100, 200, 300, 400, 600, 700, 800, 900, 1000) on a physical surface (62, 72, 74, 84) in a first direction;
a motive power apparatus (206, 306a, 306b, 406), for driving the travelling apparatus (204, 304a, 304b, 404);
a detection apparatus (220, 320, 420), for detecting an attitude of the grass-cutting robot (100, 200, 300, 400, 600, 700, 800, 900, 1000); and
a control apparatus (240, 340, 440), for applying a control signal to the grass-cutting robot (100, 200, 300, 400, 600, 700, 800, 900, 1000) when the attitude meets a predetermined condition,
**characterized in that**:
the control signal causes the motive power apparatus (206, 306a, 306b, 406) to generate a resistance in the travelling apparatus (204, 304a, 304b, 404), and the resistance causes a movement of at least part of the travelling apparatus (204, 304a, 304b, 404) in the first direction (d1, d71, d81) to be hindered; and
the resistance is enough to hinder the movement of said at least part of the travelling apparatus (204, 304a, 304b, 404) in the first direction (d1, d71, d81), but not enough to cause a movement of said at least part of the travelling apparatus (204, 304a, 304b, 404) in a second direction (d2, d72, d82) different from the first direction (d1, d71, d82).

10. Grass-cutting robot (100, 300, 600, 700, 800, 900, 1000) according to Claim 9, wherein the travelling apparatus comprises a first travelling apparatus (304a) and a second travelling apparatus (304b), the motive power apparatus comprises a first motor (306a) for driving the first travelling apparatus (304a) and a second motor (306b) for driving the second travelling apparatus (304b),
the detection apparatus (320) comprises a first encoding apparatus (322a) associated with the first travelling apparatus (304a) and a second encoding apparatus (322b) associated with the second travelling apparatus (304b),
the control apparatus (340) is configured to calculate a speed of advance and/or mileage of advance of the first travelling apparatus (304a) and the second travelling apparatus (304b) at least partly according to an output of the first encoding apparatus (322a) and the second encoding apparatus (322b), and optionally, based on the speed of advance and/or mileage of advance, calculate a speed of advance and/or a turning speed of the grass-cutting robot (100, 300, 600, 700, 800, 900, 1000).

11. Grass-cutting robot (1000) according to Claim 9, **characterized in that** the detection apparatus (220, 320, 420) comprises an apparatus for detecting whether the grass-cutting robot (1000) is close to a boundary line (10).

12. Grass-cutting robot (700, 800) according to Claim 9, **characterized in that** the detection apparatus (220, 320, 430) comprises an apparatus for detecting the angle (a1) of the grass-cutting robot (700) relative to a horizontal plane (HP) and/or an apparatus for detecting the angle (b1) between a longitudinal axis (L) of the grass-cutting robot (800) and a gradient direction (S), the apparatus for example being a gyroscope.

13. Grass-cutting robot (100, 300, 600, 700, 800, 900, 1000) according to any one of Claims 10 - 12, **characterized in that** the control apparatus (240, 340, 440) comprises a comparing means, configured to compare the following detected value with a predetermined value and generate the control signal according to the result of the comparison, the detected value comprising one or more of the following:
a stop event of the grass-cutting robot (100, 300, 600, 700, 800, 900, 1000);
the distance (L0) from the grass-cutting robot (1000) to a boundary line (10);
a speed of advance of the grass-cutting robot (100, 300, 600, 700, 800, 900, 1000);
a turning speed of the grass-cutting robot (100, 300, 600, 700, 800, 900, 1000);
the angle (a1) of the grass-cutting robot (700) relative to a horizontal plane (HP); and
the angle (b1) between a longitudinal axis (L) of the grass-cutting robot (800) and a gradient direction (S).

14. Grass-cutting robot (100, 300, 600, 700, 800, 900, 1000) according to Claim 13, **characterized in that** the control signal is applied to the motive power apparatus (304a, 304b), and preferably comprises a voltage signal or a current signal.

15. Grass-cutting robot (100, 300, 600, 700, 800, 900, 1000) according to Claim 13, **characterized in that** the control signal causes a reversal of output torque of the motive power apparatus (304a, 304b).

## Patentansprüche

1. Steuerungsverfahren für einen Grasschneideroboter (100, 200, 300, 400, 600, 700, 800, 900, 1000), der Grasschneideroboter (100, 200, 300, 400, 600, 700, 800, 900, 1000) umfassend eine Fortbewegungsvorrichtung (204, 304a, 304b, 404), die konfiguriert ist, um eine Fortbewegung des Grasschneideroboters (100, 200, 300, 400) auf einer physischen Oberfläche (62, 72, 74, 84) in eine erste Richtung (d1, d71, d81) zu erleichtern, und eine Treibkraftvorrichtung (206, 306a, 306b, 406), die konfiguriert ist, um die Fortbewegungsvorrichtung (204, 304a, 304b, 404) anzutreiben, wobei das Verfahren umfasst:
Erfassen (52) einer Einstellung des Grasschneideroboters (100, 200, 300, 400, 600, 700, 800, 900, 1000), die der Einstellung entspricht, in der eine Bewegung von mindestens einem Teil der Fortbewegungsvorrichtung (204, 304a, 304b, 404) des Grasschneideroboters (100, 200, 300, 400, 600, 700, 800, 900, 1000) veranlasst, dass sich der Grasschneideroboter (100, 200, 300, 400, 600, 700, 800, 900, 1000) in die erste Richtung (d1, d71, d81) fortbewegt,
**dadurch gekennzeichnet, dass** das Verfahren ferner umfasst:
Bestimmen (54), dass die Einstellung eine zuvor bestimmte Bedingung erfüllt, und dadurch Anlegen eines Steuersignals an die Treibkraftvorrichtung (206, 306a, 306b, 406) des Grasschneideroboters (100, 200, 300, 400, 600, 700, 800, 900, 1000), wobei das Steuersignal veranlasst, dass die Treibkraftvorrichtung (206, 306a, 306b, 406) einen Widerstand in der Fortbewegungsvorrichtung (204, 304a, 304b, 404) erzeugt, und der Widerstand veranlasst, dass die Bewegung von mindestens einem Teil der Fortbewegungsvorrichtung (204, 304a, 304b, 404) erschwert wird; und
wobei der Widerstand ausreicht, um die Bewegung des mindestens einen Teils der Fortbewegungsvorrichtung (204, 304a, 304b, 404) in die erste Richtung (d1, d71, d81) zu erschweren, jedoch nicht ausreicht, um eine Bewegung des mindestens einen Teils der Fortbewegungsvorrichtung (204, 304a, 304b, 404) in eine zweite Richtung (d2, d72, d82) zu verursachen, die sich von der ersten Richtung (d1, d71, d81) unterscheidet.

2. Steuerungsverfahren nach Anspruch 1, wobei der Winkel zwischen der zweiten Richtung (d2, d72, d82) und der ersten Richtung (d1, d71, d81) größer als 90 Grad, jedoch nicht mehr als 270 Grad und vorzugsweise etwa 180 Grad ist.

3. Steuerungsverfahren nach Anspruch 1, wobei die Treibkraftvorrichtung (206, 306a, 306b, 406) ein Drehmoment in eine dritte Richtung ausgibt, bevor das Steuersignal angelegt wird, und das Steuersignal veranlasst, dass die Treibkraftvorrichtung (206, 306a, 306b, 406) das Drehmoment in eine vierte Richtung ausgibt, die der dritten Richtung entgegengesetzt ist.

4. Steuerungsverfahren nach Anspruch 1, wobei das Steuersignal an die Treibkraftvorrichtung (206, 306a, 306b, 406) angelegt wird und vorzugsweise ein Spannungssignal oder ein Stromsignal umfasst.

5. Steuerungsverfahren nach einem der Ansprüche 1 bis 4, wobei der Schritt des Erfassens einer Einstellung des Grasschneideroboters (100, 200, 300, 400, 600, 700, 800, 900, 1000) das Erfassen eines oder mehrerer der Folgenden umfasst:
Erfassen, ob der Grasschneideroboter (100, 200, 300, 400, 600, 700, 800, 900, 1000) ein Stoppereignis erfährt;
Erfassen, ob sich der Grasschneideroboter (1000) in der Nähe einer Begrenzungslinie (10) befindet;
Erfassen einer Vorschubgeschwindigkeit des Grasschneideroboters (100, 200, 300, 400, 600, 700, 800, 900, 1000);
Erfassen einer Drehgeschwindigkeit des Grasschneideroboters (100, 200, 300, 400, 600, 700, 800, 900, 1000);
Erfassen des Winkels (a1) des Grasschneideroboters (700) relativ zu einer horizontalen Ebene (HP); und
Erfassen des Winkels (b1) zwischen einer Längsachse (L) des Grasschneideroboters (800) und einer Gradientenrichtung (S).

6. Steuerungsverfahren nach Anspruch 5, wobei die zuvor bestimmte Bedingung eine oder mehrere der Folgenden umfasst:
die Entfernung (L0) von dem Grasschneideroboter (1000) zu der Begrenzungslinie (10) ist kleiner als ein erster Schwellenwert;
die Vorschubgeschwindigkeit des Grasschneideroboters (100, 200, 300, 400, 600, 700, 800, 900, 1000) ist größer als ein zweiter Schwellenwert;
die Drehgeschwindigkeit des Grasschneideroboters (100, 200, 300, 400, 600, 700, 800, 900, 1000) ist größer als ein dritter Schwellenwert;
der Winkel (a1) des Grasschneideroboters (700) relativ zu der horizontalen Ebene (HP) ist größer als ein vierter Schwellenwert; und
der Winkel (b1) zwischen der Längsachse (L) des Grasschneideroboters (800) und der Gradientenrichtung (S) ist kleiner als ein fünfter Schwellenwert.

7. Steuerungsverfahren nach Anspruch 5 oder 6, wobei die zuvor bestimmte Bedingung ferner umfasst: der Grasschneideroboter (100, 200, 300, 400, 600, 700, 800, 900, 1000) erfährt ein Stoppereignis.

8. Steuerungsverfahren nach Anspruch 6, wobei der erste Schwellenwert vorzugsweise in dem Bereich von 0,4 m-2 m liegt, der zweite Schwellenwert vorzugsweise in dem Bereich von 0,4 m/s-1 m/s liegt, der dritte Schwellenwert vorzugsweise in dem Bereich von 3°/s-15°/s liegt, der vierte Schwellenwert vorzugsweise in dem Bereich von 5°-20° liegt und der fünfte Schwellenwert vorzugsweise in dem Bereich von 10°-80° liegt.

9. Grasschneideroboter (100, 200, 300, 400, 600, 700, 800, 900, 1000), umfassend:
eine Fortbewegungsvorrichtung (204, 304a, 304b, 404) zum Erleichtern der Fortbewegung des Grasschneideroboters (100, 200, 300, 400, 600, 700, 800, 900, 1000) auf einer physischen Oberfläche (62, 72, 74, 84) in eine erste Richtung;
eine Treibkraftvorrichtung (206, 306a, 306b, 406) zum Antreiben der Fortbewegungsvorrichtung (204, 304a, 304b, 404);
eine Erfassungsvorrichtung (220, 320, 420) zum Erfassen einer Einstellung des Grasschneideroboters (100, 200, 300, 400, 600, 700, 800, 900, 1000); und
eine Steuervorrichtung (240, 340, 440) zum Anlegen eines Steuersignals an den Grasschneideroboter (100, 200, 300, 400, 600, 700, 800, 900, 1000), wenn die Einstellung eine zuvor bestimmte Bedingung erfüllt, **dadurch gekennzeichnet, dass:**
das Steuersignal veranlasst, dass die Treibkraftvorrichtung (206, 306a, 306b, 406) einen Widerstand in der Fortbewegungsvorrichtung (204, 304a, 304b, 404) erzeugt, und der Widerstand veranlasst, dass eine Bewegung von mindestens einem Teil der Fortbewegungsvorrichtung (204, 304a, 304b, 404) in die erste Richtung (d1, d71, d81) erschwert wird; und
der Widerstand ausreicht, um die Bewegung des mindestens einen Teils der Fortbewegungsvorrichtung (204, 304a, 304b, 404) in die erste Richtung (d1, d71, d81) zu erschweren, jedoch nicht ausreicht, um eine Bewegung des mindestens einen Teils der Fortbewegungsvorrichtung (204, 304a, 304b, 404) in eine zweite Richtung (d2, d72, d82) zu veranlassen, die sich von der ersten Richtung (d1, d71, d82) unterscheidet.

10. Grasschneideroboter (100, 300, 600, 700, 800, 900, 1000) nach Anspruch 9, wobei die Fortbewegungsvorrichtung eine erste Fortbewegungsvorrichtung (304a) und eine zweite Fortbewegungsvorrichtung (304b) umfasst, die Treibkraftvorrichtung einen ersten Motor (306a) zum Antreiben der ersten Fortbewegungsvorrichtung (304a) und einen zweiten Motor (306b) zum Antreiben der zweiten Fortbewegungsvorrichtung (304b) umfasst,
die Erfassungsvorrichtung (320) eine erste Codiervorrichtung (322a), die mit der ersten bewegbaren Vorrichtung (304a) verknüpft ist, und eine zweite Codiervorrichtung (322b), die mit der zweiten bewegbaren Vorrichtung (304b) verknüpft ist, umfasst,
die Steuervorrichtung (340) konfiguriert ist, um eine Vorschubgeschwindigkeit und/oder eine Vorschubstrecke der ersten Fortbewegungsvorrichtung (304a) und der zweiten Fortbewegungsvorrichtung (304b) mindestens teilweise gemäß einer Ausgabe der ersten Codiervorrichtung (322a) und der zweiten Codiervorrichtung (322b) zu berechnen und optional, basierend auf der Vorschubgeschwindigkeit und/oder der Vorschubstrecke, eine Vorschubgeschwindigkeit und/oder eine Drehgeschwindigkeit des Grasschneideroboters (100, 300, 600, 700, 800, 900, 1000) zu berechnen.

11. Grasschneideroboter (1000) nach Anspruch 9,
**dadurch gekennzeichnet, dass** die Erfassungsvorrichtung (220, 320, 420) eine Vorrichtung zum Erfassen umfasst, ob sich der Grasschneideroboter (1000) in der Nähe einer Begrenzungslinie (10) befindet.

12. Grasschneideroboter (700, 800) nach Anspruch 9,
**dadurch gekennzeichnet, dass** die Erfassungsvorrichtung (220, 320, 430) eine Vorrichtung zum Erfassen des Winkels (a1) des Grasschneideroboters (700) relativ zu einer horizontalen Ebene (HP) und/oder eine Vorrichtung zum Erfassen des Winkels (b1) zwischen einer Längsachse (L) des Grasschneideroboters (800) und einer Gradientenrichtung (S) umfasst, wobei die Vorrichtung beispielsweise ein Gyroskop ist.

13. Grasschneideroboter (100, 300, 600, 700, 800, 900, 1000) nach einem der Ansprüche 10 bis 12, **dadurch gekennzeichnet, dass** die Steuervorrichtung (240, 340, 440) ein Vergleichsmittel umfasst, das konfiguriert ist, um den folgenden erfassten Wert mit einem zuvor bestimmten Wert zu vergleichen und das Steuersignal gemäß dem Ergebnis des Vergleichs zu erzeugen, der erfasste Wert umfassend eines oder mehrere der Folgenden:
ein Stoppereignis des Grasschneideroboters (100, 300, 600, 700, 800, 900, 1000);
die Entfernung (L0) des Grasschneideroboters (1000) zu einer Grenzlinie (10);
eine Vorschubgeschwindigkeit des Grasschneideroboters (100, 300, 600, 700, 800, 900, 1000);
eine Drehgeschwindigkeit des Grasschneideroboters (100, 300, 600, 700, 800, 900, 1000);
der Winkel (a1) des Grasschneideroboters (700) relativ zu einer horizontalen Ebene (HP); und
der Winkel (b1) zwischen einer Längsachse (L) des Grasschneideroboters (800) und einer Gradientenrichtung (S).

14. Grasschneideroboter (100, 300, 600, 700, 800, 900, 1000) nach Anspruch 13, **dadurch gekennzeichnet, dass** das Steuersignal an die Treibkraftvorrichtung (304a, 304b) angelegt wird und vorzugsweise ein Spannungssignal oder ein Stromsignal umfasst.

15. Grasschneideroboter (100, 300, 600, 700, 800, 900, 1000) nach Anspruch 13, **dadurch gekennzeichnet, dass** das Steuersignal eine Umkehr eines Ausgangsdrehmoments der Antriebsvorrichtung (304a, 304b) veranlasst.

## Revendications

1. Procédé de commande d'un robot de tonte du gazon (100, 200, 300, 400, 600, 700, 800, 900, 1000), le robot de tonte du gazon (100, 200, 300, 400, 600, 700, 800, 900, 1000) comprenant un appareil de déplacement (204, 304a, 304b, 404) conçu pour faciliter le déplacement du robot de tonte du gazon (100, 200, 300, 400) sur une surface physique (62, 72, 74, 84) dans une première direction (d1, d71, d81) et un appareil de traction (206, 306a, 306b, 406) conçu pour entraîner l'appareil de déplacement (204, 304a, 304b, 404), dans lequel le procédé comprend :
la détection (52) d'une attitude du robot de tonte du gazon (100, 200, 300, 400, 600, 700, 800, 900, 1000), correspondant à l'attitude dans laquelle un mouvement d'au moins une partie de l'appareil de déplacement (204, 304a, 304b, 404) du robot de tonte du gazon (100, 200, 300, 400, 600, 700, 800, 900, 1000) entraîne le déplacement du robot de tonte du gazon (100, 200, 300, 400, 600, 700, 800, 900, 1000) dans la première direction (d1, d71, d81),
**caractérisé en ce que** le procédé comprend en outre :
la détermination (54) que l'attitude répond à une condition prédéterminée, et ainsi l'application d'un signal de commande à l'appareil de traction (206, 306a, 306b, 406) du robot de tonte du gazon (100, 200, 300, 400, 600, 700, 800, 900, 1000), le signal de commande amenant l'appareil de traction (206, 306a, 306b, 406) à générer une résistance dans l'appareil de déplacement (204, 304a, 304b, 404), et la résistance entravant le mouvement d'au moins une partie de l'appareil de déplacement (204, 304a, 304b, 404) ; et
dans lequel la résistance est suffisante pour entraver le mouvement de ladite au moins une partie de l'appareil de déplacement (204, 304a, 304b, 404) dans la première direction (d1, d71, d81), mais pas suffisante pour provoquer un mouvement de ladite au moins une partie de l'appareil de déplacement (204, 304a, 304b, 404) dans une deuxième direction (d2, d72, d82) différente de la première direction (d1, d71, d81).

2. Procédé de commande selon la revendication 1, dans lequel l'angle entre la deuxième direction (d2, d72, d82) et la première direction (d1, d71, d81) est supérieur à 90 degrés mais ne dépasse pas 270 degrés, et de préférence environ 180 degrés.

3. Procédé de commande selon la revendication 1, dans lequel l'appareil de traction (206, 306a, 306b, 406) produit un couple dans une troisième direction avant que le signal de commande ne soit appliqué, et le signal de commande amène l'appareil de traction (206, 306a, 306b, 406) à produire un couple dans une quatrième direction opposée à la troisième direction.

4. Procédé de commande selon la revendication 1, dans lequel le signal de commande est appliqué à l'appareil de traction (206, 306a, 306b, 406), et comprend de préférence un signal de tension ou un signal de courant.

5. Procédé de commande selon l'une quelconque des revendications 1 à 4, dans lequel l'étape de détection d'une attitude du robot de tonte du gazon (100, 200, 300, 400, 600, 700, 800, 900, 1000) comprend la détection d'un ou de plusieurs des éléments suivants :
détection établissant si le robot de tonte du gazon (100, 200, 300, 400, 600, 700, 800, 900, 1000) subit un événement d'arrêt ;
détection établissant si le robot de tonte du gazon (1000) est proche d'une ligne de limite (10) ;
détection d'une vitesse d'avancement du robot de tonte du gazon (100, 200, 300, 400, 600, 700, 800, 900, 1000) ;
détection d'une vitesse de rotation du robot de tonte du gazon (100, 200, 300, 400, 600, 700, 800, 900, 1000) ;
détection de l'angle (a1) du robot de tonte du gazon (700) par rapport à un plan horizontal (HP) ; et
détection de l'angle (b1) entre un axe longitudinal (L) du robot de tonte du gazon (800) et une direction de gradient (S).

6. Procédé de commande selon la revendication 5, dans lequel la condition prédéterminée comprend un ou plusieurs des éléments suivants :
la distance (L0) entre le robot de tonte du gazon (1000) et la ligne de limite (10) étant inférieure à un premier seuil ;
la vitesse d'avancement du robot de tonte du gazon (100, 200, 300, 400, 600, 700, 800, 900, 1000) étant supérieure à un deuxième seuil ;
la vitesse de rotation du robot de tonte du gazon (100, 200, 300, 400, 600, 700, 800, 900, 1000) étant supérieure à un troisième seuil ;
l'angle (a1) du robot de tonte du gazon (700) par rapport au plan horizontal (HP) étant supérieur à un quatrième seuil ; et
l'angle (b1) entre l'axe longitudinal (L) du robot de tonte du gazon (800) et la direction de gradient (S) étant inférieur à un cinquième seuil.

7. Procédé de commande selon la revendication 5 ou 6, dans lequel la condition prédéterminée comprend en outre : le robot de tonte du gazon (100, 200, 300, 400, 600, 700, 800, 900, 1000) subissant un événement d'arrêt.

8. Procédé de commande selon la revendication 6, dans lequel le premier seuil est de préférence compris dans la plage allant de 0,4 m à 2 m, le deuxième seuil est de préférence compris dans la plage allant de 0,4 m/s à 1 m/s, le troisième seuil est de préférence compris dans la plage allant de 3°/s à 15°/s, le quatrième seuil est de préférence compris dans la plage allant de 5° à 20°, et le cinquième seuil est de préférence compris dans la plage allant de 10° à 80°.

9. Robot de tonte du gazon (100, 200, 300, 400, 600, 700, 800, 900, 1000), comprenant :
un appareil de déplacement (204, 304a, 304b, 404), pour faciliter le déplacement du robot de tonte du gazon (100, 200, 300, 400, 600, 700, 800, 900, 1000) sur une surface physique (62, 72, 74, 84) dans une première direction ;
un appareil de traction (206, 306a, 306b, 406), permettant d'entraîner l'appareil de déplacement (204, 304a, 304b, 404) ;
un appareil de détection (220, 320, 420), permettant de détecter une attitude du robot de tonte du gazon (100, 200, 300, 400, 600, 700, 800, 900, 1000) ; et
un appareil de commande (240, 340, 440), permettant d'appliquer un signal de commande au robot de tonte du gazon (100, 200, 300, 400, 600, 700, 800, 900, 1000) lorsque l'attitude répond à une condition prédéterminée, **caractérisé en ce que :**
le signal de commande entraîne l'appareil de traction (206, 306a, 306b, 406) à générer une résistance dans l'appareil de déplacement (204, 304a, 304b, 404), et la résistance entrave un mouvement d'au moins une partie de l'appareil de déplacement (204, 304a, 304b, 404) dans la première direction (d1, d71, d81) ; et
la résistance est suffisante pour entraver le mouvement de ladite au moins une partie de l'appareil de déplacement (204, 304a, 304b, 404) dans la première direction (d1, d71, d81), mais pas suffisante pour provoquer un mouvement de ladite au moins une partie de l'appareil de déplacement (204, 304a, 304b, 404) dans une deuxième direction (d2, d72, d82) différente de la première direction (d1, d71, d82).

10. Robot de tonte du gazon (100, 300, 600, 700, 800, 900, 1000) selon la revendication 9, dans lequel l'appareil de déplacement comprend un premier appareil de déplacement (304a) et un second appareil de déplacement (304b), l'appareil de traction comprend un premier moteur (306a) pour entraîner le premier appareil de déplacement (304a) et un second moteur (306b) pour entraîner le second appareil de déplacement (304b),
l'appareil de détection (320) comprend un premier appareil de codage (322a) associé au premier appareil de déplacement (304a) et un second appareil de codage (322b) associé au second appareil de déplacement (304b),
l'appareil de commande (340) est conçu pour calculer une vitesse d'avancement et/ou un kilométrage d'avancement du premier appareil de déplacement (304a) et du second appareil de déplacement (304b) au moins en partie en fonction d'une production du premier appareil de codage (322a) et du second appareil de codage (322b), et éventuellement, en fonction de la vitesse d'avancement et/ou du kilométrage d'avancement, calculer une vitesse d'avancement et/ou une vitesse de rotation du robot de tonte du gazon (100, 300, 600, 700, 800, 900, 1000).

11. Robot de tonte du gazon (1000) selon la revendication 9,
**caractérisé en ce que** l'appareil de détection (220, 320, 420) comprend un appareil permettant de détecter si le robot de tonte du gazon (1000) est proche d'une ligne de limite (10).

12. Robot de tonte du gazon (700, 800) selon la revendication 9,
**caractérisé en ce que** l'appareil de détection (220, 320, 430) comprend un appareil de détection de l'angle (a1) du robot de tonte du gazon (700) par rapport à un plan horizontal (HP) et/ou un appareil de détection de l'angle (b1) entre un axe longitudinal (L) du robot de tonte du gazon (800) et une direction de gradient (S), l'appareil étant par exemple un gyroscope.

13. Robot de tonte du gazon (100, 300, 600, 700, 800, 900, 1000) selon l'une quelconque des revendications 10 à 12, **caractérisé en ce que** l'appareil de commande (240, 340, 440) comprend un moyen de comparaison, conçu pour comparer la valeur détectée suivante à une valeur prédéterminée et générer le signal de commande selon le résultat de la comparaison, la valeur détectée comprenant un ou plusieurs des éléments suivants :
un événement d'arrêt du robot de tonte du gazon (100, 300, 600, 700, 800, 900, 1000) ;
la distance (L0) du robot de tonte du gazon (1000) à une ligne de limite (10) ;
une vitesse d'avancement du robot de tonte du gazon (100, 300, 600, 700, 800, 900, 1000) ;
une vitesse de rotation du robot de tonte du gazon (100, 300, 600, 700, 800, 900, 1000) ;
l'angle (a1) du robot de tonte du gazon (700) par rapport à un plan horizontal (HP) ; et
l'angle (b1) entre un axe longitudinal (L) du robot de tonte du gazon (800) et une direction de gradient (S).

14. Robot de tonte du gazon (100, 300, 600, 700, 800, 900, 1000) selon la revendication 13, **caractérisé en ce que** le signal de commande est appliqué à l'appareil de traction (304a, 304b), et comprend de préférence un signal de tension ou un signal de courant.

15. Robot de tonte du gazon (100, 300, 600, 700, 800, 900, 1000) selon la revendication 13, **caractérisé en ce que** le signal de commande entraîne une inversion du couple produit de l'appareil de traction (304a, 304b).
